# EUROPEAN PATENT APPLICATION

(11) **EP 4 636 575 A2**
(43) Date of publication of application: **22.10.2025**
(21) Application number: 25165463.8
(22) Date of filing: 21.03.2025
(51) Int. Cl.: G06F 8/30, G06F 8/41, G06F 8/75, G06N 3/045, G06N 20/00

(54) **MAPPING OF PREPROCESSED SOURCE CODE TO ORIGINAL SOURCE CODE**

(30) Priority: 29.03.2024 US 202418621743
(71) Applicant: Microsoft Technology Licensing, LLC, Redmond, WA 98052 (US)
(72) Inventor: HUNT, GALEN CLYDE, Redmond, Washington, 98052 (US)
(74) Representative: CMS Cameron McKenna Nabarro Olswang LLP

(57) **Abstract**

This document relates to software development. For instance, the disclosed techniques can generate a mapping data structure that maps positions in virtual preprocessed source code to corresponding positions in original source code, or, in some cases, a scratch memory region. The mapping data structure can be employed to extract portions of the original source code that satisfy certain conditions, such as having control flow statements, calling functions, or accessing specific data structures. **In** some cases, the extracted portions of the original source code can be modified using a generative language model.

## Description

### BACKGROUND

Software developers generally prefer to use higher-level programming languages such as C or Java that allow them to write source code with relatively abstract concepts. For instance, these programming languages allow developers to use variables to store and modify data, define functions, and use control flow structures such as for- and while-loops, if-then statements, etc. In contrast, lower-level assembly code is much more verbose and involves developers manually moving data between registers and memory addresses, and generally requires detailed knowledge of the instruction set architecture of the underlying hardware.

### SUMMARY

This Summary is provided to introduce a selection of concepts in a simplified form. These concepts are further described below in the Detailed Description. This Summary is not intended to identify key features or essential features of the claimed subject matter, nor is it intended to be used to limit the scope of the claimed subject matter.

The description generally relates to techniques for software development. One example includes a method or technique that can be performed on a computing device. The method or technique can include obtaining original source code from a code base, the original source code having one or more preprocessor statements. The method or technique can also include extracting the one or more preprocessor statements from the original source code. The method or technique can also include analyzing the one or more preprocessor statements to determine positions in virtual
preprocessed source code that correspond to positions in the original source code. The method or technique can also include generating a mapping data structure that maps the positions in the virtual preprocessed source code to the positions in the original source code. The method or technique can also include storing the mapping data structure, the mapping data structure providing a basis for subsequent generation of the virtual preprocessed source code.

Another example includes a method or technique that can be performed on a computing device. The method or technique can include receiving a request to modify original source code from a code base that satisfies one or more conditions. The method or technique can also include accessing a mapping data structure that maps positions in virtual preprocessed source code to positions in the original source code from the code base. The method or technique can also include generating the virtual preprocessed source code by retrieving characters from the positions in the original source code. The method or technique can also include based at least on the virtual preprocessed source code, extracting a portion of the original source code from the code base that satisfies the one or more conditions. The method or technique can also include modifying the extracted portion of the original source code according to the request.

Another example entails a system comprising a processor and a storage medium storing instructions. When executed by the processor, the instructions cause the system to receive a request to modify original source code from a code base that satisfies one or more conditions. The instructions can also cause the system to access a mapping data structure that maps positions in virtual preprocessed source code to positions in the original source code. The instructions can also cause the system to generate the virtual preprocessed source code by retrieving characters from the positions in the original source code. The instructions can also cause the system to, based at least on the virtual preprocessed source, extract a portion of the original source code from the code base that satisfies the one or more conditions. The instructions can also cause the system to modify the extracted portion of the original source code according to the request.

The above-listed examples are intended to provide a quick reference to aid the reader and are not intended to define the scope of the concepts described herein.

### BRIEF DESCRIPTION OF THE DRAWINGS

The Detailed Description is described with reference to the accompanying figures. In the figures, the left-most digit(s) of a reference number identifies the figure in which the reference number first appears. The use of similar reference numbers in different instances in the description and the figures may indicate similar or identical items.
FIG. 1 illustrates an example of a generative language model, consistent with some implementations of the present concepts.
FIGS. 2A, 2B, and 2D illustrate examples of original source code shown in a development environment interface, consistent with some implementations of the present concepts.
FIG. 2C illustrates an example of preprocessed source code, consistent with some implementations of the present concepts.
FIG. 3A illustrates an example of an abstract syntax tree created from preprocessed source code, consistent with some implementations of the disclosed techniques.
FIG. 3B illustrates an example of a dependency block diagram created from an abstract syntax tree and/or preprocessed source code, consistent with some implementations of the disclosed techniques.
FIG. 4 illustrates an example of a mapping data structure that maps positions in preprocessed source code to corresponding positions in original source code, consistent with some implementations of the disclosed techniques.
FIGS. 5A and 5B illustrate additional examples of original source code, consistent with some implementations of the present concepts.
FIG. 5C illustrates an example of a portion of original source code having control flow statements, consistent with some implementations of the present concepts.
FIG. 5D illustrates an example of a portion of original source code having function calls, consistent with some implementations of the present concepts.
FIG. 5E illustrates an example of a portion of original source code that accesses variables, consistent with some implementations of the present concepts.
FIGS. 5F and 5G illustrate example portions of original source code that access specific data structures, consistent with some implementations of the present concepts.
FIG. 6A illustrates a flowchart of an example method for generating a mapping data structure that maps positions in preprocessed source code to corresponding positions in original source code, consistent with some implementations of the present concepts.
FIG. 6B illustrates a flowchart of an example method for modifying original source code that satisfies one or more conditions, consistent with some implementations of the present concepts.
FIG. 7 illustrates an example of a system in which the disclosed implementations can be performed, consistent with some implementations of the present concepts.

### DETAILED DESCRIPTION

### OVERVIEW

As noted above, software developers generally prefer to write source code in higher-level programming languages that support control flow structures, function definitions, and variables. Tools such as compilers and interpreters can process source code to obtain binary code suitable for execution on a particular processor. However, these tools generally do not directly convert source code written by developers into binary code. Rather, preprocessing statements are often performed on the source code to generate an intermediate, preprocessed representation of the source code that is subsequently converted into binary code.

For instance, preprocessors can perform operations such as including the text of header files into a preprocessed representation. As another example, preprocessors can remove comments and whitespace. In addition, preprocessors can replace source code as specified by a given directive, such as the #define macro directive of a C or C++ preprocessor.

As a result, the preprocessed source code that is compiled or interpreted is often very different than the original source code that is edited by a developer. On the other hand, the preprocessed source code can be employed by automated analysis algorithms (e.g., parsing with a context-free grammar) to produce some very useful logical representations of source code, such as an abstract syntax tree or dependency block diagram. Because these logical representations are often produced from preprocessed source code, it is difficult to map information extracted from these logical representations back to the original source code with character-to-character accuracy.

Furthermore, the preprocessed source code is often far larger than the original source code. For instance, a .c or .cpp file can include one or more .h (header) files that can each have many lines of code. Often, the same header files are included across many .c or .cpp even though very few lines of code in the included header files are actually utilized in any of the .c or .cpp files. As a consequence, the resulting preprocessed source code can include a great deal of code obtained from included header files that is not actually used by the compiled program.

The disclosed implementations offer techniques for mapping of preprocessed source code to original source code with character-to-character accuracy. By generating a data structure that maps positions in the preprocessed source code to corresponding positions in the original source code, it is possible to analyze and/or modify the original source code with knowledge obtained by applying automated tools to the preprocessed source code. Moreover, this can be performed in a dynamic manner by generating virtual preprocessed source code on an as-needed basis, without necessarily recreating a full version of the preprocessed source code that would be created during standard preprocessing. Portions of the dynamically created virtual preprocessed source code can be cached to avoid frequent generation of the same subset of preprocessed source code.

Furthermore, the disclosed techniques allow for extraction of portions of original source code that satisfy various conditions. As just a few examples, the disclosed techniques can be employed to extract control flow statements, code with function calls, code that accesses variables, and/or code that accesses specific data structures from original source code. The extracted source code can be input to a generative language model to modify the extracted code. For instance, the generative language model can be employed to optimize the extracted code, add comments to the extracted source code, translate the extracted source code into a different programming language, rename variables and/or functions, etc.

### MACHINE LEARNING OVERVIEW

There are various types of machine learning frameworks that can be trained to perform a given task. Support vector machines, decision trees, and neural networks are just a few examples of machine learning frameworks that have been used in a wide variety of applications, such as image processing, computer vision, and natural language processing. Some machine learning frameworks, such as neural networks, use layers of nodes that perform specific operations.

In a neural network, nodes are connected to one another via one or more edges. A neural network can include an input layer, an output layer, and one or more intermediate layers. Individual nodes can process their respective inputs according to a predefined function, and provide an output to a subsequent layer, or, in some cases, a previous layer. The inputs to a given node can be multiplied by a corresponding weight value for an edge between the input and the node. In addition, nodes can have individual bias values that are also used to produce outputs. Various training procedures can be applied to learn the edge weights and/or bias values. The term "parameters" when used without a modifier is used herein to refer to learnable values such as edge weights and bias values that can be learned by training a machine learning model, such as a neural network.

A neural network structure can have different layers that perform different specific functions. For example, one or more layers of nodes can collectively perform a specific operation, such as pooling, encoding, or convolution operations. For the purposes of this document, the term "layer" refers to a group of nodes that share inputs and outputs, e.g., to or from external sources or other layers in the network. When referring to a neural network, the term "operation" refers to a function that can be performed by one or more layers of nodes. The term "model structure" refers to an overall architecture of a layered model, including the number of layers, the connectivity of the layers, and the type of operations performed by individual layers. The term "neural network structure" refers to the model structure of a neural network. The term "trained model" and/or "tuned model" refers to a model structure together with parameters for the model structure that have been trained or tuned. Note that two trained models can share the same model structure and yet have different values for the parameters, e.g., if the two models are trained on different training data or if there are underlying stochastic processes in the training process.

There are many machine learning tasks for which there is a relative lack of training data. One broad approach to training a model with limited task-specific training data for a particular task involves "transfer learning." In transfer learning, a model is first pretrained on another task for which significant training data is available, and then the model is tuned to the particular task using the task-specific training data.

The term "pretraining," as used herein, refers to model training on a set of pretraining data to adjust model parameters in a manner that allows for subsequent tuning of those model parameters to adapt the model for one or more specific tasks. In some cases, the pretraining can involve a self-supervised learning process on unlabeled pretraining data, where a "self-supervised" learning process involves learning from the structure of pretraining examples, potentially in the absence of explicit (e.g., manually-provided) labels. Subsequent modification of model parameters obtained by pretraining is referred to herein as "tuning." Tuning can be performed for one or more tasks using supervised learning from explicitly-labeled training data, in some cases using a different task for tuning than for pretraining.

### TERMINOLOGY

The term "generative model," as used herein, refers to a machine learning model employed to generate new content. One type of generative model is a "generative language model," which is a model that can generate new sequences of text given some input. One type of input for a generative language model is a natural language prompt, e.g., a query potentially with some additional context. For instance, a generative language model can be implemented as a neural network, e.g., a long short-term memory-based model, a decoder-based generative language model, etc. Examples of decoder-based generative language models include versions of models such as ChatGPT, BLOOM, PaLM, Mistral, Gemini, and/or LLaMA. Generative language models can be trained to predict tokens in sequences of textual training data. When employed in inference mode, the output of a generative language model can include new sequences of text that the model generates.

In some cases, a generative model can be multi-modal. For instance, a model may be capable of using various combinations of text, images, audio, application states, code, or other modalities as inputs and/or generating combinations of text, images, audio, application states, or code or other modalities as outputs. Here, the term "generative language model" encompasses multi-modal generative models where at least one mode of output includes tokens representing text, such as natural language and/or source code in a programming language.

One use of a generative language model involves generating source code. The term "original source code" refers to source code, written by a human being or an automated tool, prior to being preprocessed. The term "preprocessed source code" refers to source code that has had one or more preprocessor statements from the original source applied, thus modifying the original source code. Preprocessed source code can be created by running a preprocessor on source code during a compilation process. **In** addition, virtual preprocessed source code can be generated dynamically by using a mapping data structure to selectively preprocess portions of a program or code base, e.g., without necessarily fully preprocessing the program or code base. The term "logical representation" refers to a conceptual representation of source code, such as a tree or graph structure, that conveys information such as control flow, function calls, variable accesses, etc. The term "generated source code" refers to source code that has been generated by a generative language model, e.g., in response to a prompt instructing the generative language model to generate source code from extracted source code.

The term "prompt," as used herein, refers to input provided to a generative model that the generative model uses to generate outputs. A prompt can include a query, e.g., a request for information from the generative language model. A prompt can also include context, or additional information that the generative language model uses to respond to the query. The term "in-context learning," as used herein, refers to learning, by a generative model, from examples input to the model at inference time, where the examples enable the generative model to learn without performing explicit training, e.g., without updating model parameters using supervised, unsupervised, or semi-supervised learning.

The term "machine learning model" refers to any of a broad range of models that can learn to generate automated user input and/or application output by observing properties of past interactions between users and applications. For instance, a machine learning model could be a neural network, a support vector machine, a decision tree, a clustering algorithm, etc. In some cases, a machine learning model can be trained using labeled training data, a reward function, or other mechanisms, and in other cases, a machine learning model can learn by analyzing data without explicit labels or rewards.

### EXAMPLE DECODER-BASED GENERATIVE LANGUAGE MODEL

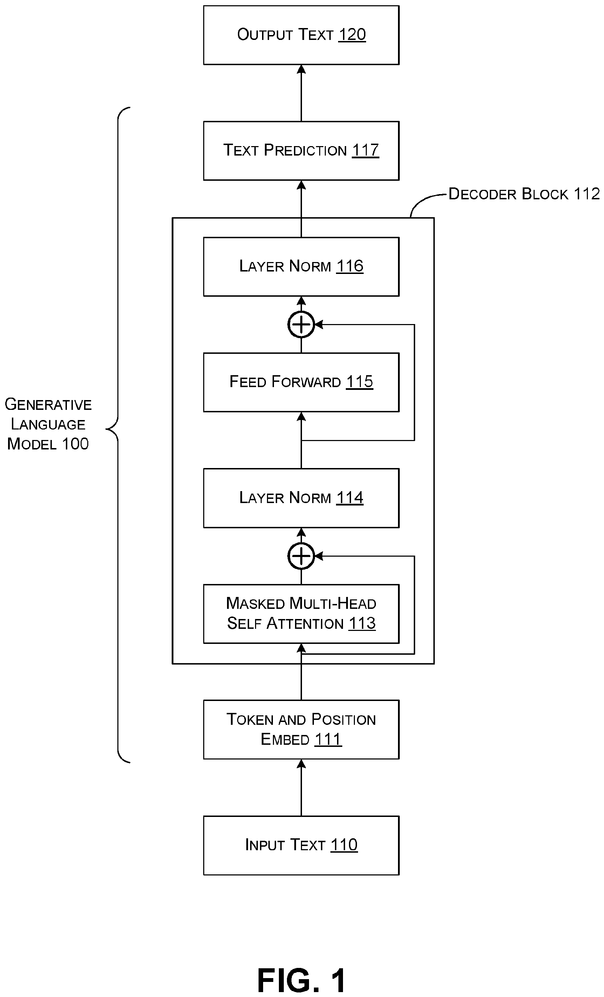

FIG. 1 illustrates an exemplary generative language model 100 (e.g., a transformer-based decoder) that can be employed using the disclosed implementations. Generative language model 100 is an example of a machine learning model that can be used to perform one or more tasks that involve generating text such as natural language and/or source code, as discussed more below. For the purposes of this document, the term "natural language" means language that is normally used by human beings for writing or conversation.

Generative language model 100 can receive input text 110, e.g., a prompt from a user. For instance, the input text can include words, sentences, phrases, or other representations of language. The input text can be broken into tokens and mapped to token and position embeddings 111 representing the input text. Token embeddings can be represented in a vector space where semantically-similar and/or syntactically-similar embeddings are relatively close to one another, and less semantically-similar or less syntactically-similar tokens are relatively further apart. Position embeddings represent the location of each token in order relative to the other tokens from the input text.

The token and position embeddings 111 are processed in one or more decoder blocks 112. Each decoder block implements masked multi-head self-attention 113, which is a mechanism relating different positions of tokens within the input text to compute the similarities between those tokens. Each token embedding is represented as a weighted sum of other tokens in the input text. Attention is only applied for already-decoded values, and future values are masked. Layer normalization 114 normalizes features to mean values of 0 and variance to 1, resulting in smooth gradients. Feed forward layer 115 transforms these features into a representation suitable for the next iteration of decoding, after which another layer normalization 116 is applied. Multiple instances of decoder blocks can operate sequentially on input text, with each subsequent decoder block operating on the output of a preceding decoder block. After the final decoding block, text prediction layer 117 can predict the next word in the sequence, which is output as output text 120 in response to the input text 110 and also fed back into the language model. The output text can be a newly-generated response to the prompt provided as input text to the generative language model.

Generative language model 100 can be trained using techniques such as next-token prediction or masked language modeling on a large, diverse corpus of documents. For instance, the text prediction layer 117 can predict the next token in a given document, and parameters of the decoder block 112 and/or text prediction layer can be adjusted when the predicted token is incorrect. In some cases, a generative language model can be pretrained on a large corpus of documents. Then, a pretrained generative language model can be tuned using a reinforcement learning technique such as reinforcement learning from human feedback ("RLHF").

In some cases, a generative language model can be trained and/or tuned using examples of source code in one or more programming languages. For instance, the generative language model can be trained and/or tuned to generate source code from a natural language description of the code. In other cases, the generative language model can be trained and/or tuned to translate source code in one programming language to another programming language.

### FIRST SOURCE CODE EXAMPLE

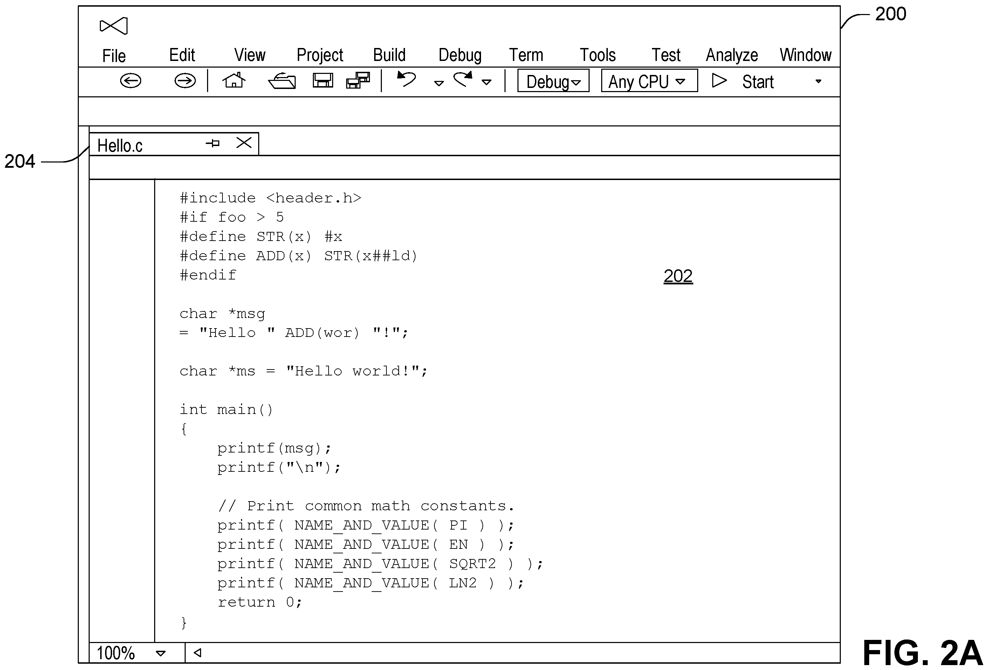

FIG. 2A illustrates a development environment interface 200 with a code editor 202 that can be used to edit source code for a program. Here, the user is editing a file entitled "hello.c." Note that hello.c includes a number of preprocessor statements. For instance, the statement "#include <header.h>" instructs a preprocessor to add the contents of a file entitled "header.h" to the "hello.c" file. The statement "if foo > 5" instructs the preprocessor to perform two additional preprocessor statements to define STR(x) and ADD(x) if the value of foo is greater than 5.

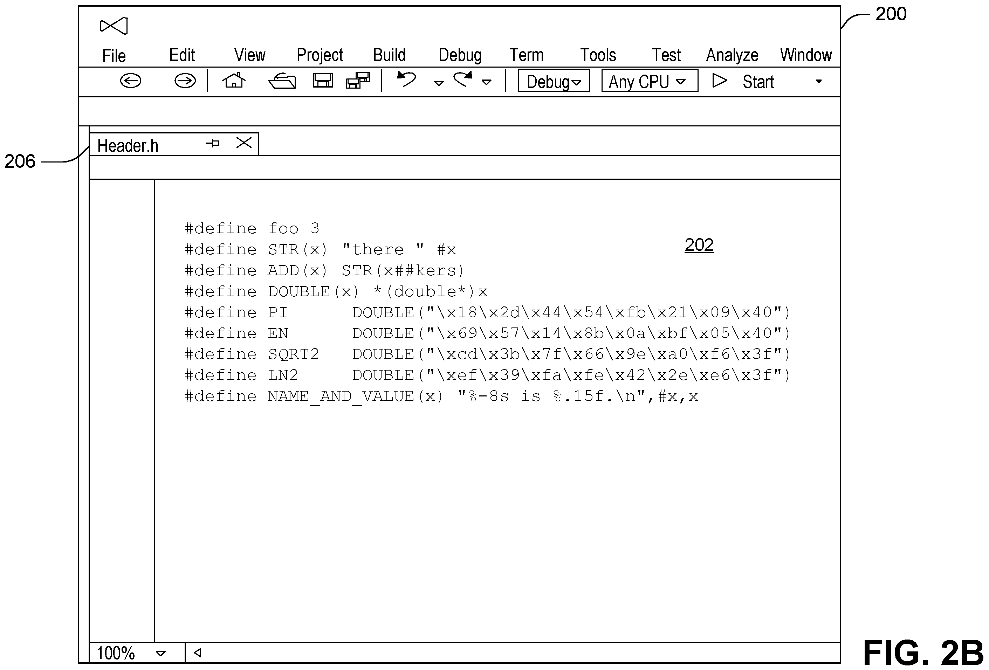

FIG. 2B shows development environment interface 200 with the file "header.h" opened in the development environment. The header.h file includes a number of additional preprocessor statements, including defining the value of foo to be 3 and also defining STR(x) and ADD(x). Referring back to FIG. 2A, note that since foo is not greater than 5, the definitions of STR(x) and ADD(x) from header.h will be applied by the preprocessor and the definitions from hello.c will not be applied. This is an example of conditional compilation.

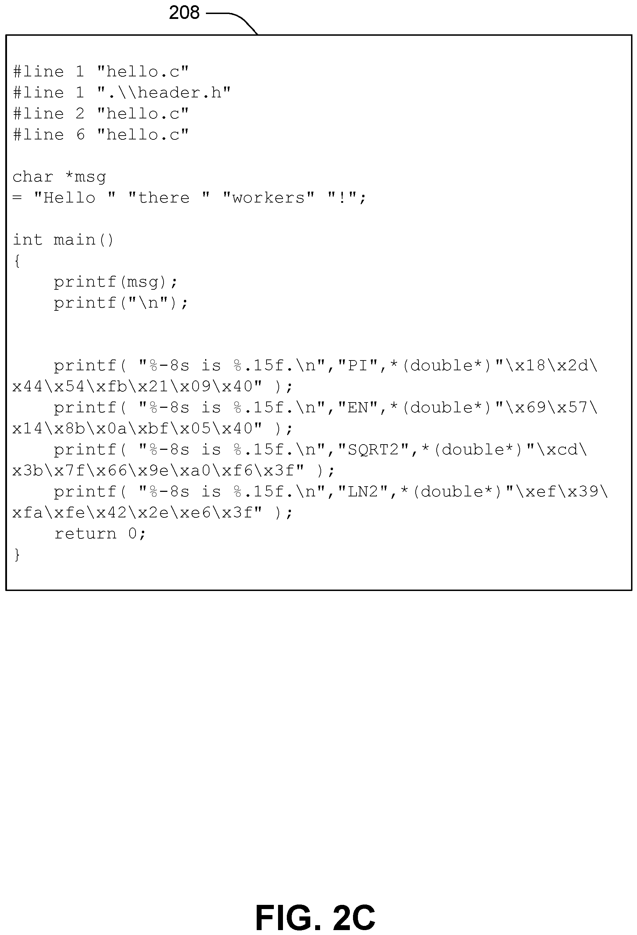

FIG. 2C shows an example of preprocessed source code 208. The preprocessed source code can be stored as ".i" file, which is the file format seen by the compiler after preprocessing completes. Note that the preprocessed source code is not shown in the development environment since developers rarely work directly with preprocessed source code. Note that even for a relatively simple program having only the example hello.c and header.h original source code files, the preprocessed source code is significantly different than the original source code.

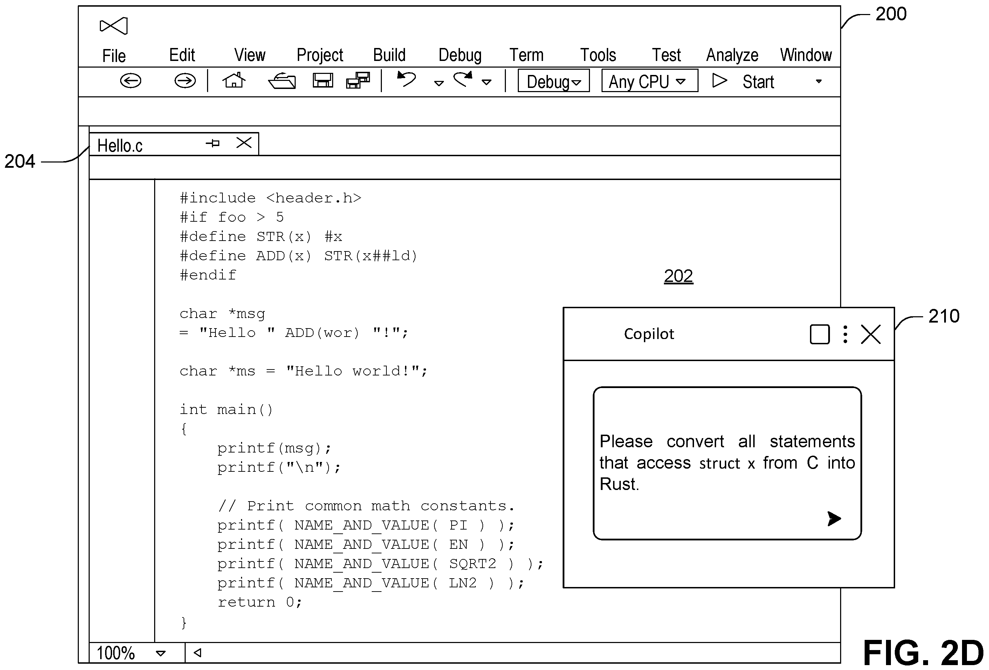

FIG. 2D shows the development environment interface 200 with a Copilot interface 210. Here, the developer has requested that the Copilot (e.g., generative language model 100) convert all statements accessing a specific data structure into a different programming language, as described more below. As discussed more below, this can be performed by extraction a portion of the original source code based on the preprocessed code using a mapping data structure to identify positions in the original source code to extract.

### EXAMPLE LOGICAL REPRESENTATIONS

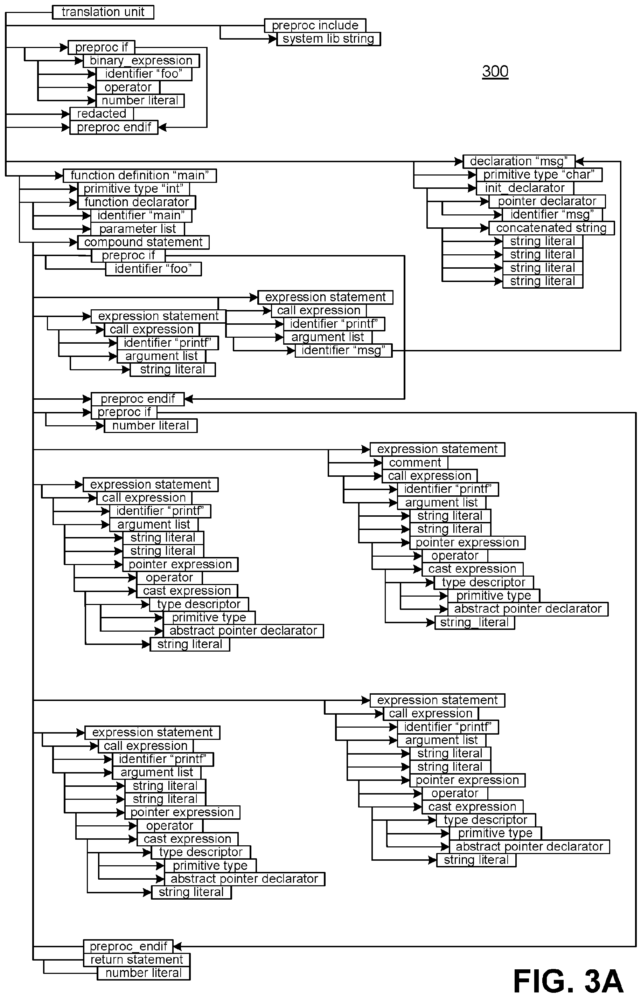

Once preprocessor statements have been applied by a preprocessor, an automated analysis tool such as a compiler, interpreter, or other code processing algorithm can be applied to the preprocessed source code. For instance, although ultimately compilers and interpreters produce binary code, they often create logical intermediate representations that convey useful information about a given code base. For instance, FIG. 3A shows an abstract syntax tree 300, which can be generated from preprocessed source code 208. The abstract syntax tree represents the structure of the processed source code. In an abstract syntax tree, the structure of the tree represents information conveyed textually in source code.

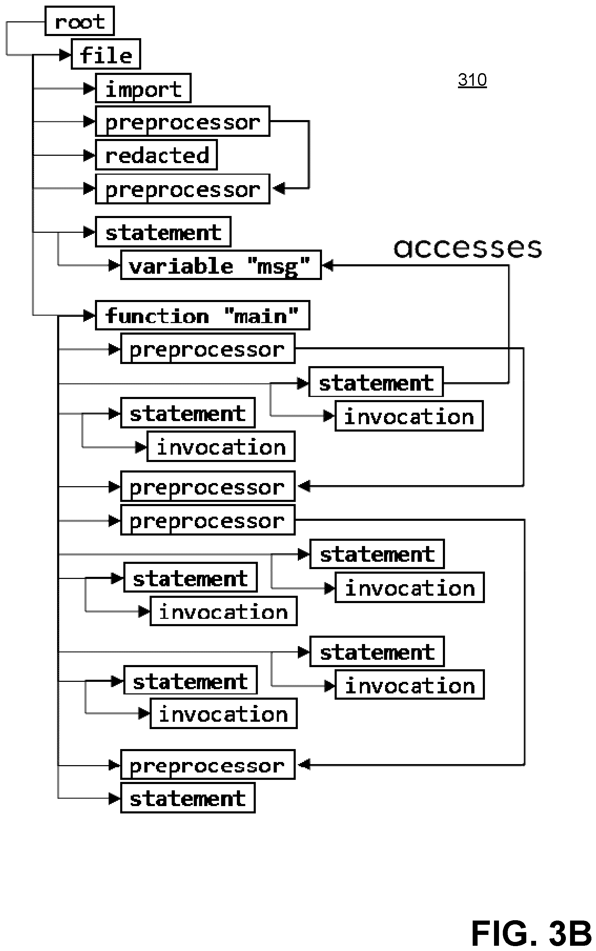

An abstract syntax tree for a given program can be further processed to derive other logical representations of the code base. For instance, a dependency analysis tool can walk through the abstract syntax tree to create dependency block diagram 310, as shown in FIG. 3B. The dependency block diagram conveys information such as which statements in the preprocessed source code perform control flow, access specific variables, invoke functions, etc.

Note that abstract syntax trees and dependency block diagrams are just two examples of logical representations of a code base that can be used for analyzing the code. Other examples include parse trees, directed acyclic graphs, etc. Note, however, that logical representations of a given code base generally convey information about how the code functions *after* preprocessing statements have been applied by the preprocessor. Because preprocessing statements have not been applied in the original source code, it is difficult to derive accurate, comprehensive logical representations of a code base by directly processing the original source code.

### EXAMPLE MAPPING DATA STRUCTURE

One way to obtain the logical representations of a code base described above is to employ a preprocessor to derive preprocessed source code, such as the .i file shown in FIG. 2C. However, once a preprocessor operates on original source code, there is typically no straightforward way to determine which statements in the original source code correspond to statements in the preprocessed source code with character-to-character accuracy. Similarly, it can be difficult to determine which nodes of an abstract syntax tree or dependency block diagram correspond to specific statements in the original source code.

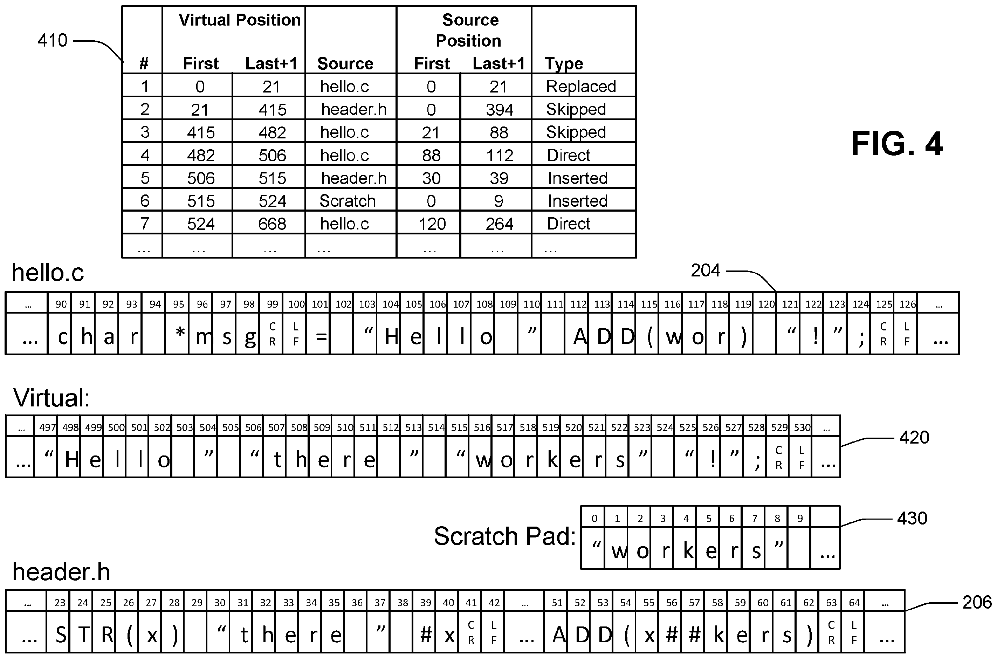

The disclosed techniques can be employed to generate a mapping data structure 410, shown in FIG. 4. The mapping data structure maps positions in virtual preprocessed source code 420 to corresponding positions in the original source code files, hello.c 204 and header.h 206. Thus, the mapping data structure can be employed to determine which statements in the original source code correspond to particular statements in the preprocessed source code.

Generally speaking, mapping data structure 410 can be created as follows. Each preprocessor statement in original source code is extracted. Then, those preprocessor statements are analyzed to determine where to obtain characters that can subsequently be employed to create the virtual preprocessed source code 420. For instance, text from included files such as header.h can be included in the virtual preprocessed source code, conditionally-compiled statements can be removed if the conditions are not met, whitespace and comments can be removed, code can be rewritten via macros, etc. The appropriate locations where the characters can be obtained is identified by the mapping data structure 410. In some cases, the characters are obtained directly from the .c file or inserted from the .h file or scratch pad 430. Scratch pad 430 is a memory region where characters obtained by evaluating preprocessor statements can be stored for subsequent inclusion in the virtual preprocessed source code. Portions of the dynamically created virtual preprocessed source code can be cached to avoid frequent generation of the same subset of preprocessed source code.

As the preprocessor statements are analyzed, the corresponding positions in the original source code files (hello.c 204 and header.h 206) and the virtual preprocessed source code 420 are tracked. These positions are used to populate the mapping data structure 410. For instance, virtual position range 482-506 corresponds to position range 88-112 in hello.c. Note that these positions include the characters "Hello " at positions 103-110 of hello.c, which also at virtual positions 497-504 of virtual preprocessed source code 420. Further, note that the virtual preprocessed source code is not necessarily created at the same time as the mapping data structure. Rather, the mapping data structure can be employed at a later time to extract the appropriate characters from original source code or the scratch pad 430. Portions of the dynamically created virtual preprocessed source code can be cached to avoid frequence generation of the same subset of preprocessed source code.

In this case, the text in the virtual preprocessed source code 420 can be taken directly from the corresponding source code file, hello.c. This is indicated by the "type" field of the mapping data structure 410. Other types include "replaced," for instances where a given preprocessor statement causes text in a given source file to be replaced by other text. For instance, the statement "#include <header.h>" can be replaced by the contents of the header.h file in the first line of hello.c. Note that the statement "#include <header.h>" includes 19 characters but also there are implicit carriage return and line feed characters at the end of this statement to return to the first character of the second line of the hello.c file, thus 21 characters can be replaced as indicated in the first row of the mapping data structure. Here, the type field for lines 0-21 of "hello.c" is "replaced."

As another example, note that lines 21-88 of hello.c are skipped as a result of conditional compilation. Since header.h defines foo to be equal to 3, the #if statement on the second line of hello.c evaluates to false, and these positions are skipped when generating the virtual preprocessed source code 420. Accordingly, the type field for lines 21-88 of hello.c is "skipped." In some cases, preprocessor statements can be applied in a separate region of memory, shown as scratch pad 430 in FIG. 4. For instance, scratch pad 430 can be employed to derive the string "workers" from the statements:

```
      char *msg
      = "Hello " ADD(wor) "!";
 in hello.c and:
      #define ADD(x) STR(x##kers)
 from header.h.
```

Now, consider a scenario where a user or an automated tool replaces the string "Hello" with the string "Hey" in the virtual preprocessed source code 420. This is analogous to directly editing preprocessed source code 208, shown in FIG. 2C. This will change the function of the resulting executable, but the original source code remains unchanged, and thus there is a mismatch between the functionality of the original source code and the functionality of the executable.

However, because mapping data structure 410 conveys the positions in the original source code where the string "Hello" is present, it is possible to modify the original source code to reflect this change. While this simple example could readily be figured out by a software programmer by inspecting the source code or by an automated tool using heuristics, there are many cases where more complex relationships exist between the virtual preprocessed source code 420. Thus, it is not always possible for human developers or automated tools to readily infer how original source code corresponds to preprocessed source code. By creating mapping data structure 410, a precise mapping between positions in the preprocessed source code and the original source code can be maintained.

### SECOND SOURCE CODE EXAMPLE

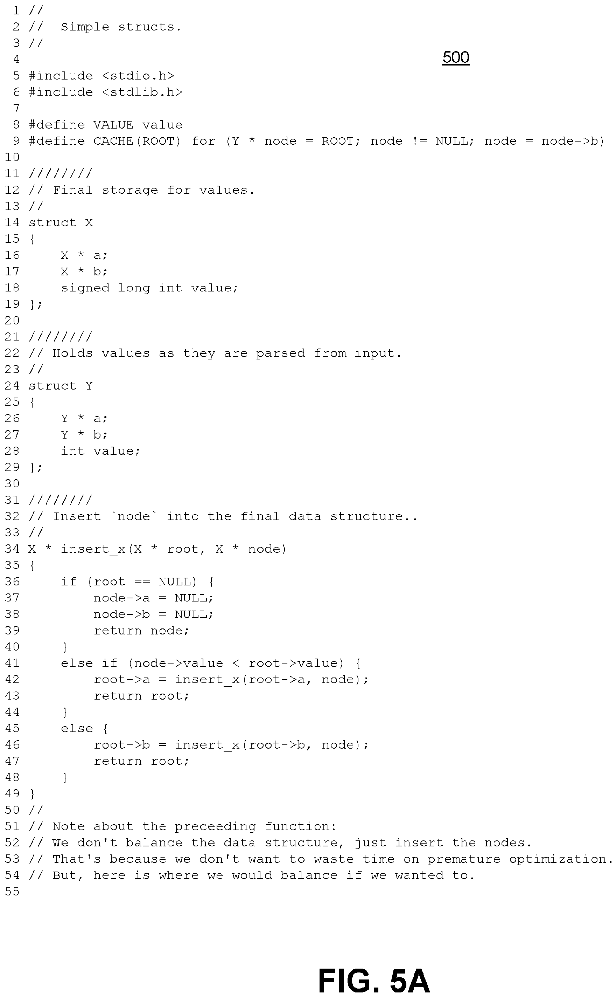

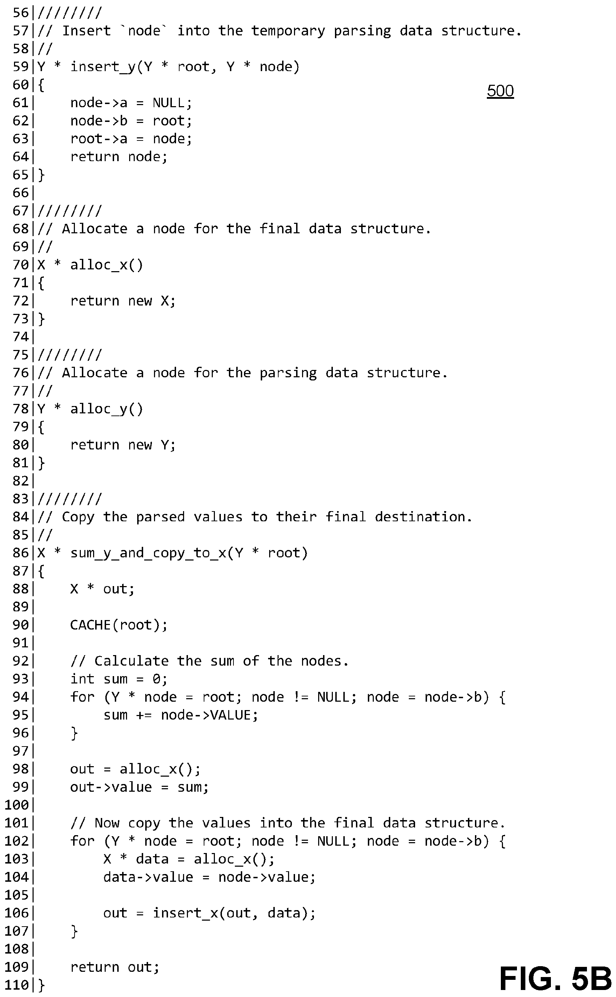

FIGS. 5A and 5B show another coding example with original source code 500, which includes some more complex examples of control flow statements, function calls, and variable accesses. Original source code 500 can be evaluated as described above to generate a mapping data structure that maps positions of virtual preprocessed source code (not shown) to positions in the original source code or scratch pad. In addition, a compiler, interpreter, or other code analysis tool can be applied to the virtual preprocessed source code to generate one or more logical representations, such as a dependency block diagram.

By processing a dependency block diagram, nodes that correspond to control flow statements can be identified. Each of the control flow statements is readily identified in the virtual preprocessed source code. However, for reasons already discussed, it can be difficult to identify control flow statements in original source code. For instance, referring to FIG. 5A, the statement on line 9 "#define CACHE(ROOT) for (Y * node = ROOT; node != NULL; node = node->b)" defines "CACHE" as a for loop control structure. "CACHE" appears again on line 90 of the original source code in FIG. 5B. However, because the preprocessor has not been applied to the original source code, it is not apparent simply by reading the original source code that line 90 of the original source code includes a control flow statement. However, the preprocessor will replace "CACHE" in the original source code with a for loop, which can be readily identified in the virtual preprocessed source code. Thus, a tool analyzing the virtual preprocessed source code can generate a logical representation, such as a dependency block diagram, that accurately reflects the operation of the for loop and identifies where the for loop is present in the preprocessed source code.

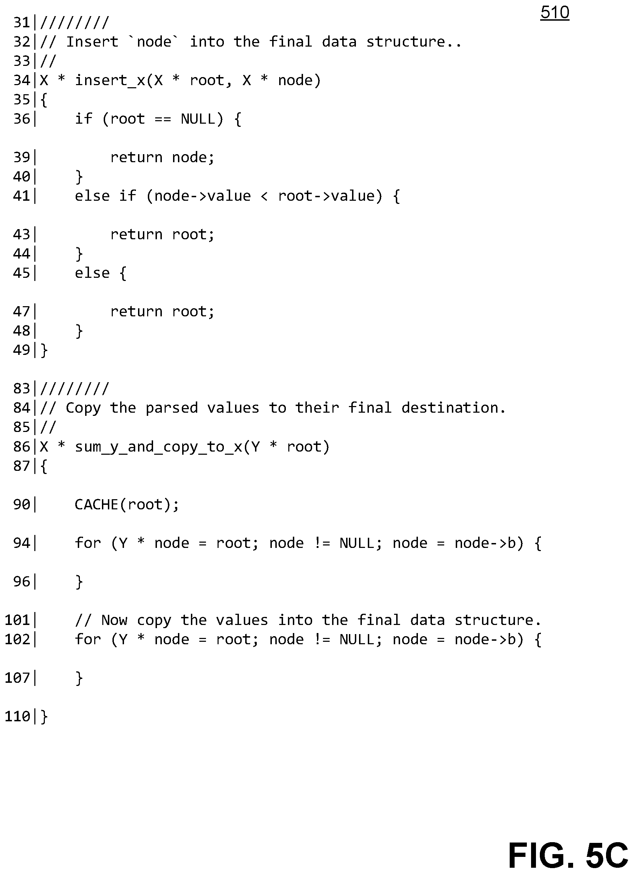

Now, consider a scenario where a user wishes to extract all control flow statements from the original source code 500. An automated tool can use a dependency block diagram or other logical representation to identify control flow of the program, and then those control flow statements can be identified in the virtual preprocessed source code. Now, the mapping data structure can be employed to map from the positions of the control flow statements in the virtual preprocessed source code to their corresponding positions in the original source code or scratch pad. Then, a portion of the original source code having control flow statements can be extracted. The extracted portion 510 is shown in FIG. 5C.

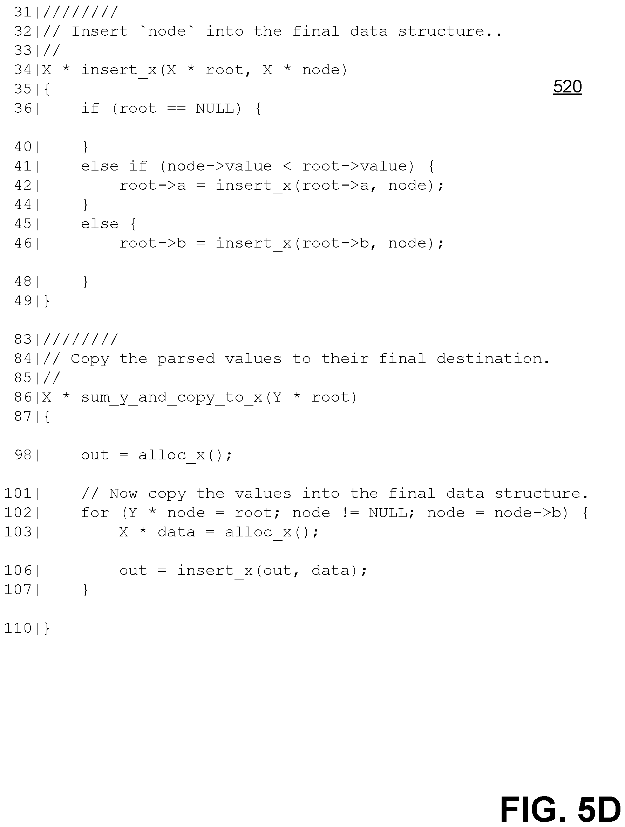

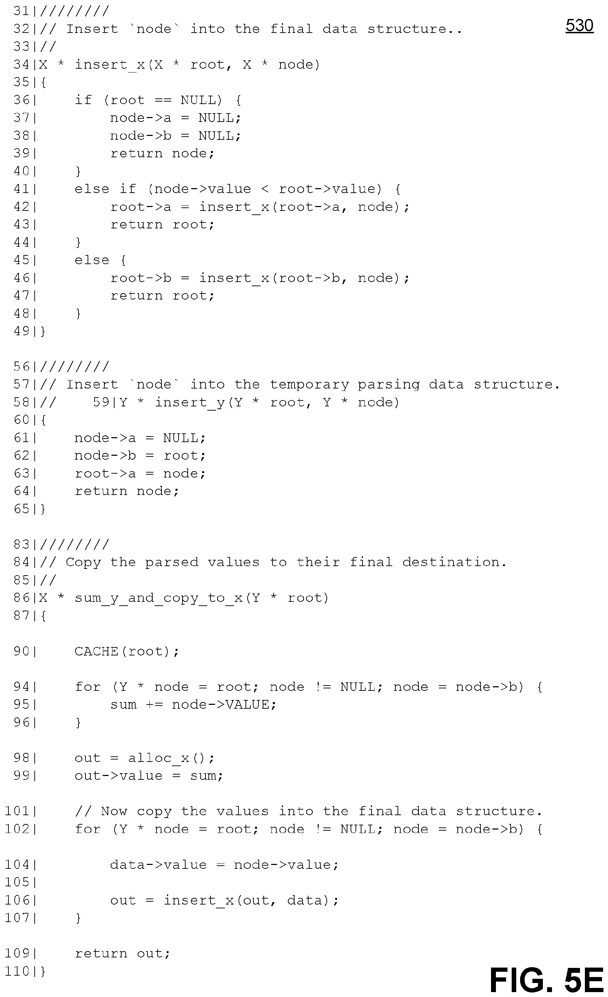

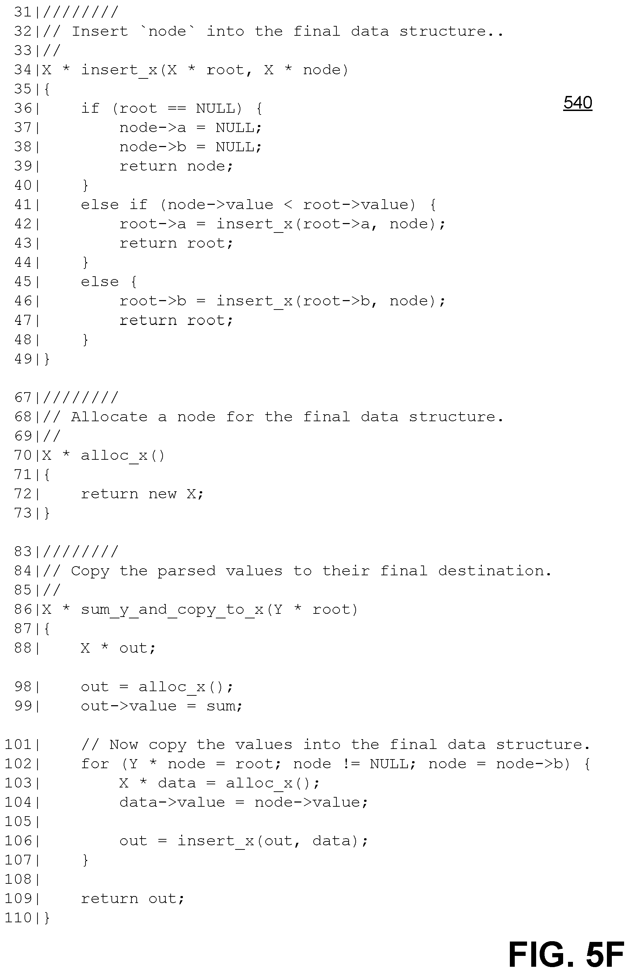

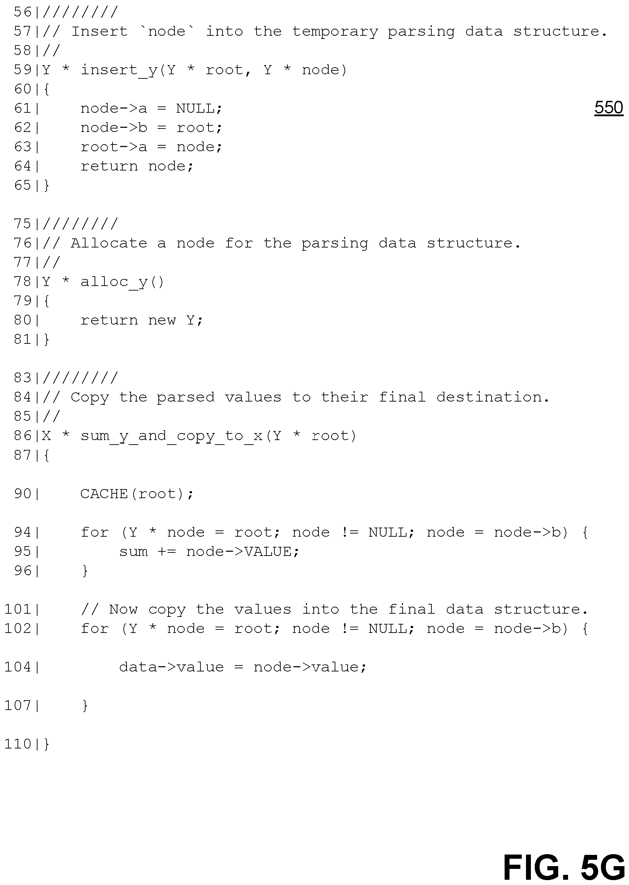

A similar approach can be employed to extract other portions of source code. For instance, FIG. 5D shows an extracted portion 520, which includes statements from the original source code that call functions. FIG. 5E shows an extracted portion 530, which includes statements from the original source code that access variables. FIG. 5F shows an extracted portion 540, which includes statements from the original source code that access a specific data structure, struct x. FIG. 5G shows an extracted portion 550, which includes statements from the original source code that access a specific data structure, struct y.

### EXAMPLE SOURCE CODE MODIFICATIONS

Now, consider a scenario where a developer wishes to convert all of the control flow statements in a given program to a different programming language. Referring back to FIG. 1, generative language model 100 may be capable of converting C code to a programming language such as Rust. For instance, various examples of C code translated to Rust can be provided to the generative language model, as well as a prompt requesting translation of extracted portion 510 to Rust. The generative language model can output Rust code that has the same control flow functionality as the extracted portion of C code.

As another example, suppose the developer wishes to rename all of the function calls in the original source code without changing the functionality of the code. For instance, the developer may wish to update the function names to comply with development conventions for a particular organization. The developer could input extracted portion 520 to generative language model 100 with one or more examples of how to rename the function calls, and/or a document describing the development conventions. The generative language model can output modified C code with function names replaced to comply with the development conventions.

As another example, suppose the developer wishes to optimize a particular data structure, such as struct x. The developer can input extracted portion 540 to generative language model 100 with one or more examples of how data structures can be optimized. The generative language model can output modified C code with struct x having been optimized.

As still further examples, some implementations can request that the generative language model rename variables, translate code into a different language, add comments to source code, etc. Because generative language models can be trained using original source code, they are adept at generating modified source code that is similar to what a human developer would likely produce. However, generative language models are not generally trained to understand or modify preprocessed source code. By using a mapping data structure as described herein, automated automated analysis tools can operate on preprocessed source code and identify statements in the preprocessed source code that meet certain conditions, e.g., as specified by a developer. Then, portions of code satisfying the conditions can be extracted from original source code using the mapping data structure and modified by a generative language model.

### FIRST EXAMPLE METHOD

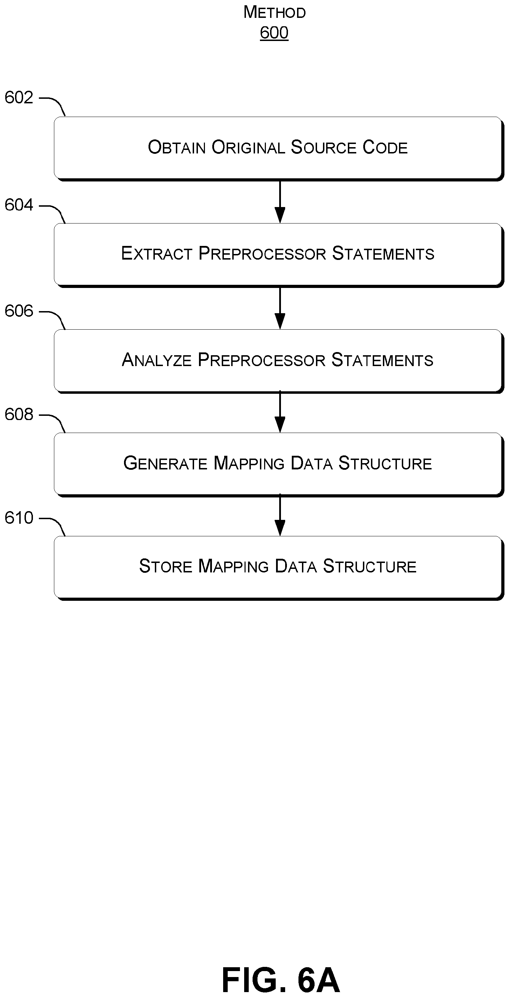

FIG. 6A illustrates an example computer-implemented method 600, consistent with some implementations of the present concepts. Method 600 can be implemented on many different types of devices, e.g., by one or more cloud servers, by a client device such as a laptop, tablet, or smartphone, or by combinations of one or more servers, client devices, etc.

Method 600 begins at block 602, where original source code is obtained. For instance, the original source code can be retrieved from a code repository. The original source code can be part of a project that is being developed by one or more developers.

Method 600 continues at block 604, where one or more preprocessor statements are extracted from the original source code. For instance, the preprocessor statements can perform included operations that include contents of another source code file into a particular source code file, conditional compilation operations, code rewriting operations, etc.

Method 600 continues at block 606, where the one or more preprocessor statements are analyzed to determine positions in virtual preprocessed source code that correspond to positions in the original source code or, in some cases, a scratch pad where results from evaluating preprocessor statements are stored. Portions of the dynamically created virtual preprocessed source code can be cached to avoid frequent generation of the same subset of preprocessed source code. For instance, the positions of where to obtain each character that will be replaced, skipped, or inserted when generating the virtual preprocessed source code can be tracked.

Method 600 continues at block 608, where a mapping data structure is generated. The mapping data structure can map the positions in the virtual preprocessed source code to the positions in the original source code or scratch pad. For instance, the mapping data structure can map virtual positions of specific characters in the virtual preprocessed source code to corresponding positions of specific characters in different files of the original source code. The mapping data structure can also include an operation type field indicating what type of operation to perform to generate the virtual preprocessed source code.

Method 600 continues at block 610, where the mapping data structure is stored. For instance, the mapping data structure can be stored on persistent storage and/or in memory. The mapping data structure can provide a basis for subsequent generation of the virtual preprocessed source code and/or extraction of portions of the original source code that satisfy one or more conditions.

In some cases, method 600 can be performed continually, periodically, and/or iteratively as changes are made to the original source code by developers and/or a generative language model. Thus, the mapping data structure can provide a current snapshot of the mappings for a current build or view of the original source code. In some cases, different mapping data structures can be maintained for different versions of the original source code.

### SECOND EXAMPLE METHOD

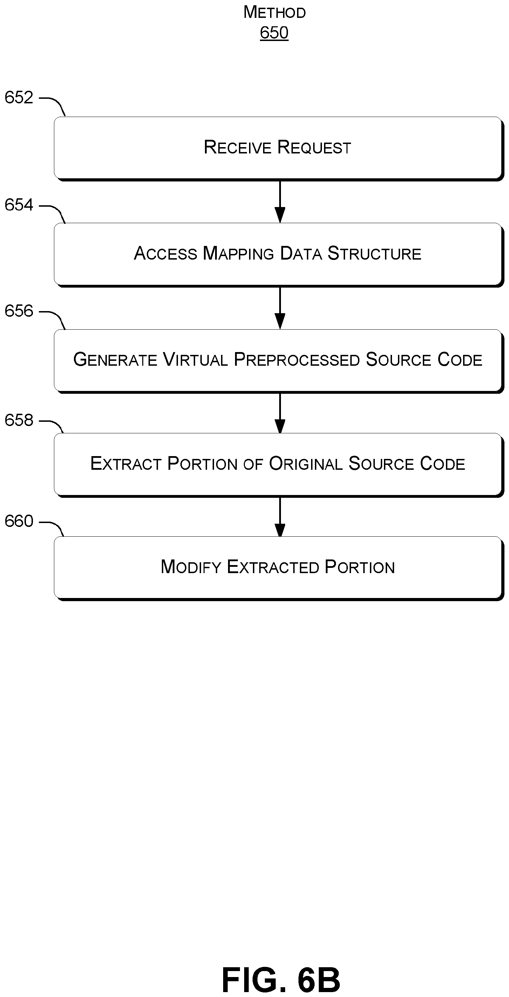

FIG. 6B illustrates an example computer-implemented method 600, consistent with some implementations of the present concepts. Method 650 can be implemented on many different types of devices, e.g., by one or more cloud servers, by a client device such as a laptop, tablet, or smartphone, or by combinations of one or more servers, client devices, etc.

Method 650 begins at block 652, where a request to modify original source code is received. For instance, the request can specify one or more conditions for the original source code, such as specifying that the source code includes control flow statements, calls functions, accesses variables or specific data structures, etc. The request can also specify the modification to be performed, e.g., optimizing original source code, adding comments to the original source code, translating the original source code into a different programming language, renaming variables and/or functions in the original source code, etc.

Method 650 continues at block 654, where a mapping data structure is accessed. The mapping data structure can map positions in virtual preprocessed source code to corresponding positions in the original source code or a scratch pad. For instance, the mapping data structure can map positions of specific characters in the virtual preprocessed source code to corresponding positions of specific characters in one or more source code files.

Method 650 continues at block 656, where virtual preprocessed source code is created. For instance, individual characters from the original source code or scratch pad can be retrieved from the positions in the mapping table and combined to generate the virtual preprocessed source code. In some cases, the characters are retrieved on an as-needed basis as requested by an analysis tool. In some cases, the virtual preprocessed source code can also be cached in memory for later use.

Method 650 continues at block 658, where a portion of the original source code is extracted based on the mapping data structure. For instance, the analysis tool can be used to identify positions in the virtual preprocessed source code, which can be looked up in the mapping data structure to identify the original source code files and positions therein that satisfy conditions received at block 652.

Method 650 continues at block 660, where the extracted portion is modified. For instance, the extracted portion can be input to a generative language model with a prompt requesting modification of the extracted portion. The modification can involve optimizing the extracted portion, adding comments to the extracted portion, translating the extracted portion into a different programming language, renaming variables and/or functions in the extracted portion, etc. In some cases, block 662 can also involve adding the modified source code to a code repository where the original source code was retrieved from, either in addition to, or by replacing, the extracted portion of the original source code. In some cases, method 650 can be performed multiple times to modify different portions of the original source code from a code base. For instance, method 650 can be performed iteratively until all source code in the code base has been converted into a different programming language, until all source code in the code base has been optimized or commented, until all functions and/or variables have been renamed and/or optimized, etc.

### EXAMPLE SYSTEM

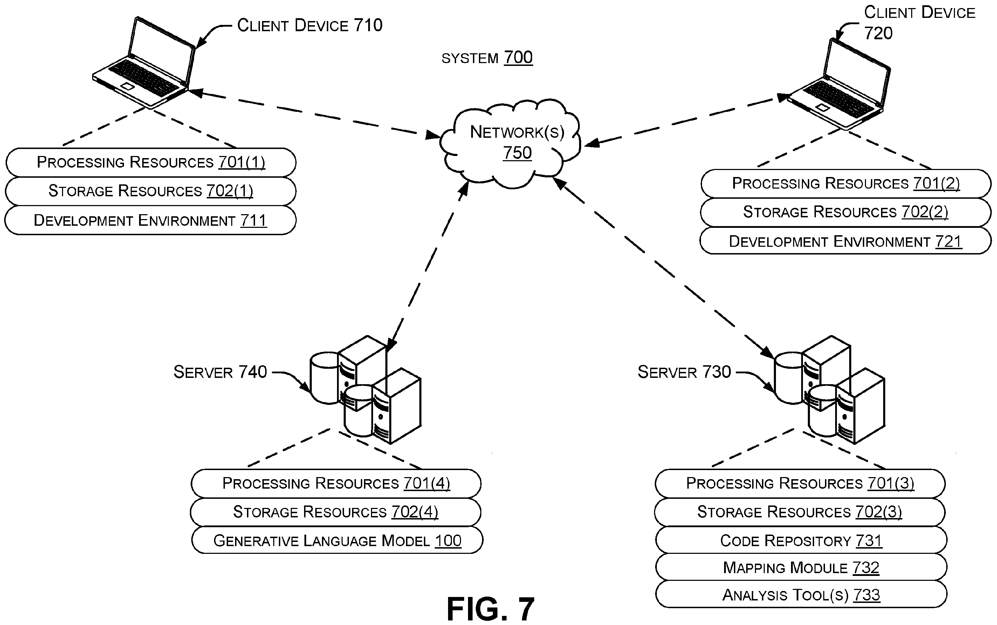

The present implementations can be performed in various scenarios on various devices. FIG. 7 shows an example system 700 in which the present implementations can be employed, as discussed more below.

As shown in FIG. 7, system 700 includes a client device 710, a client device 720, a server 730, and a server 740, connected by one or more network(s) 750. Note that the client devices can be embodied as mobile devices such as smart phones or tablets, as well as stationary devices such as desktops, server devices, etc. Likewise, the servers can be implemented using various types of computing devices. In some cases, any of the devices shown in FIG. 7, but particularly the servers, can be implemented in data centers, server farms, etc.

Certain components of the devices shown in FIG. 7 may be referred to herein by parenthetical reference numbers. For the purposes of the following description, the parenthetical (1) indicates an occurrence of a given component on client device 710, (2) indicates an occurrence of a given component on client device 720, (3) indicates an occurrence on server 730, and (4) indicates an occurrence on server 740. Unless identifying a specific instance of a given component, this document will refer generally to the components without the parenthetical.

Generally, the devices shown in FIG. 7 may have respective processing resources 701 and storage resources 702, which are discussed in more detail below. The devices may also have various modules that function using the processing and storage resources to perform the techniques discussed herein. The storage resources can include both persistent storage resources, such as magnetic or solid-state drives, and volatile storage, such as one or more random-access memory devices. In some cases, the modules are provided as executable instructions that are stored on persistent storage devices, loaded into the random-access memory devices, and read from the random-access memory by the processing resources for execution.

Client device 710 can include development environment 711, and client device 720 can include a development environment 721. The development environments can include compilers, debuggers, linkers, code editors, etc. The development environments can also include a generative language model interface as described above, e.g., that receives requests to modify source code and prompts a generative language model to perform the modifications.

Server 730 can host a code repository 731, a mapping module 732, and analysis tool(s) 733. The code repository can host code from a code base, e.g., code developed by software developers using client devices 710 and/or 720. The mapping module can generate a mapping data structure as described previously that maps positions in original source code to positions in virtual preprocessed source code. The analysis tool(s) can analyze the virtual preprocessed source code to generate logical representations, such as abstract syntax trees, dependency block diagrams, directed acyclic graphs, etc. Then, the analysis tools can use the logical representations and the mapping data structure to extract portions of original source code from the code repository that meet one or more conditions. In other cases, the development environments on the respective client devices can include analysis tools that generate the logical representations and extract the portions of the original source code that are subsequently modified.

Server 740 can host generative language model 100 as described above with respect to FIG. 1. The development environments 711 and 721 on client devices 710 and 720 can employ the generative language model interface to request modifications to the extracted portions of the original source code. The generative language model can generate the requested modifications and send the modified source code back to the client devices. The development environments can then be employed to add the code generated by the generative language model to the code repository 731.

### TECHNICAL EFFECT

While generative language models are quite capable of generating high-quality source code, there are several limitations to using generative language models for modification of large-scale code bases. Generative language models have certain memory limits, e.g., a generative language model might only accept on the order of 100k input tokens. On the other hand, a large code base might have millions of lines of code. Furthermore, the preprocessing can expand the size of the source code by factors of 10x to 10,000x. Thus, it is not possible to modify an entire code base at once using a generative language model, as only relatively small portions of the code base will fit into the contextual memory of the generative language model.

One way to overcome this limitation involves selectively entering individual portions of the original source code to the generative language model at a time. However, this is not always practical, because large code bases often have references to other locations in the code base that are very far apart. As a simple example, a function having a definition in one source code file might be called in hundreds of other source code files. Because all of the source code files that invoke that function are not likely to fit into the contextual memory limit of the generative language model, it is not straightforward to have the generative language model modify every instance of the function in one generation step.

Automated analysis tools can help address this issue by analyzing code to determine which portions of code meet certain conditions, such as having control flow statements, function calls, variable accesses, etc. However, automated tools generally work on fully preprocessed source code and often cannot reliably identify which portions of the original source code correspond to the preprocessed source code that meets these conditions. Complicating matters, generative language models are generally trained on original source code written by human developers, or on preprocessed source code, and are not readily equipped to work simultaneously on original source code and preprocessed source code at the same time.

The disclosed techniques can overcome the limitations of generative language models by employing a mapping data structure that maps positions in virtual preprocessed source code to corresponding positions in original source code. This allows automated analysis tools to be employed on virtual preprocessed source code to identify where original source code meeting specific conditions is located in the virtual preprocessed code. Then, the corresponding positions in the original source code can be identified using the mapping data structure. The portion of the original source code that meets the conditions can then be extracted and input to a generative language model.

Because the extracted portions often are much smaller than the original source code base, they can fit into the contextual memory limit of a generative language model. Furthermore, the extracted portions are logically complete from the perspective of the generative language model, e.g., the generative language model receives all calls to a given function, all accesses to a particular variable, etc. Then, the generative language model can modify the extracted portion as requested by a developer. The modified source code generated by the generative language model can be employed to update the code base.

### DEVICE IMPLEMENTATIONS

As noted above with respect to FIG. 7, system 700 includes several devices, including a client device 710, a client device 720, a server 730, and a server 740. As also noted, not all device implementations can be illustrated, and other device implementations should be apparent to the skilled artisan from the description above and below.

The term "device", "computer," "computing device," "client device," and or "server device" as used herein can mean any type of device that has some amount of hardware processing capability and/or hardware storage/memory capability. Processing capability can be provided by one or more hardware processors (e.g., hardware processing units/cores) that can execute computer-readable instructions to provide functionality. Computer-readable instructions and/or data can be stored on storage, such as storage/memory and or the datastore. The term "system" as used herein can refer to a single device, multiple devices, etc.

Storage resources can be internal or external to the respective devices with which they are associated. The storage resources can include any one or more of volatile or non-volatile memory, hard drives, flash storage devices, and/or optical storage devices (e.g., CDs, DVDs, etc.), among others. As used herein, the term "computer-readable media" can include signals. In contrast, the term "computer-readable storage media" excludes signals. Computer-readable storage media includes "computer-readable storage devices." Examples of computer-readable storage devices include volatile storage media, such as RAM, and non-volatile storage media, such as hard drives, optical discs, and flash memory, among others.

In some cases, the devices are configured with a general-purpose hardware processor and storage resources. Processors and storage can be implemented as separate components or integrated together as in computational RAM. In other cases, a device can include a system on a chip (SOC) type design. In SOC design implementations, functionality provided by the device can be integrated on a single SOC or multiple coupled SOCs. One or more associated processors can be configured to coordinate with shared resources, such as memory, storage, etc., and/or one or more dedicated resources, such as hardware blocks configured to perform certain specific functionality. Thus, the term "processor," "hardware processor" or "hardware processing unit" as used herein can also refer to central processing units (CPUs), graphical processing units (GPUs), controllers, microcontrollers, processor cores, or other types of processing devices suitable for implementation both in conventional computing architectures as well as SOC designs.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), etc.

In some configurations, any of the modules/code discussed herein can be implemented in software, hardware, and/or firmware. In any case, the modules/code can be provided during manufacture of the device or by an intermediary that prepares the device for sale to the end user. In other instances, the end user may install these modules/code later, such as by downloading executable code and installing the executable code on the corresponding device.

Also note that devices generally can have input and/or output functionality. For example, computing devices can have various input mechanisms such as keyboards, mice, touchpads, voice recognition, gesture recognition (e.g., using depth cameras such as stereoscopic or time-of-flight camera systems, infrared camera systems, RGB camera systems or using accelerometers/gyroscopes, facial recognition, etc.), microphones, etc. Devices can also have various output mechanisms such as printers, monitors, speakers, etc.

Also note that the devices described herein can function in a stand-alone or cooperative manner to implement the described techniques. For example, the methods and functionality described herein can be performed on a single computing device and/or distributed across multiple computing devices that communicate over network(s) 750. Without limitation, network(s) 750 can include one or more local area networks (LANs), wide area networks (WANs), the Internet, and the like.

### ADDITIONAL EXAMPLES

Various examples are described above. Additional examples are described below. One example includes a computer implemented method comprising obtaining original source code from a code base, the original source code having one or more preprocessor statements, extracting the one or more preprocessor statements from the original source code, analyzing the one or more preprocessor statements to determine positions in virtual preprocessed source code that correspond to positions in the original source code, generating a mapping data structure that maps the positions in the virtual preprocessed source code to the positions in the original source code, and storing the mapping data structure, the mapping data structure providing a basis for subsequent generation of the virtual preprocessed source code.

Another example can include any of the above and/or below examples where the one or more preprocessor statements comprise an include statement in a particular source code file, the include statement including contents of another file into the particular source code file.

Another example can include any of the above and/or below examples where the one or more preprocessor statements comprise a conditional compilation statement in a particular source code file.

Another example can include any of the above and/or below examples where the one or more preprocessor statements comprise a code rewriting statement.

Another example can include any of the above and/or below examples where the mapping data structure maps character positions of the virtual preprocessed source code to corresponding character positions in the original source code.

Another example can include any of the above and/or below examples where the mapping data structure has an operation type field indicating operations to be performed when generating the virtual preprocessed source code.

Another example includes a computer implemented method comprising receiving a request to modify original source code from a code base that satisfies one or more conditions, accessing a mapping data structure that maps positions in virtual preprocessed source code to positions in the original source code from the code base, generating the virtual preprocessed source code by retrieving characters from the positions in the original source code, based at least on the virtual preprocessed source code, extracting a portion of the original source code from the code base that satisfies the one or more conditions, and modifying the extracted portion of the original source code according to the request.

Another example can include any of the above and/or below examples where the modifying comprises inputting the extracted portion of the original source code to a generative machine learning model with a prompt requesting modification of the extracted portion and receiving modified source code from the generative machine learning model.

Another example can include any of the above and/or below examples where the one or more conditions specify that the extracted portion of the original source code includes control flow statements.

Another example can include any of the above and/or below examples where the one or more conditions specify that the extracted portion of the original source code includes function call statements.

Another example can include any of the above and/or below examples where the one or more conditions specify that the extracted portion of the original source code includes variable-accessing statements.

Another example can include any of the above and/or below examples where the one or more conditions specify that the extracted portion of the original source code includes statements that access a specific data structure.

Another example can include any of the above and/or below examples where the prompt requests optimizing the extracted portion of the original source code or adding comments to the extracted portion of the original source code.

Another example can include any of the above and/or below examples where the prompt requests translating the extracted portion of the original source code into a different programming language.

Another example can include any of the above and/or below examples where the prompt requests renaming functions or variables in the extracted portion of the original source code.

Another example can include any of the above and/or below examples where the positions in the virtual preprocessed source code are identified using a logical representation of the source code that is generated by an automated analysis tool.

Another example can include any of the above and/or below examples where the method further comprises generating the logical representation by dynamically generating the virtual preprocessed source code and providing the dynamically-generated virtual preprocessed source code to the automated analysis tool.

Another example can include any of the above and/or below examples where the method further comprises iteratively modifying further extracted portions of the original source code using the generative machine learning model and replacing the further extracted portions until an entirety of the original source code has been modified and replaced.

Another example includes a system comprising a processor and a storage medium storing instructions which, when executed by the processor, cause the system to receive a request to modify original source code from a code base that satisfies one or more conditions, access a mapping data structure that maps positions in virtual preprocessed source code to positions in the original source code, generate the virtual preprocessed source code by retrieving characters from the positions in the original source code, based at least on the virtual preprocessed source, extract a portion of the original source code from the code base that satisfies the one or more conditions, and modify the extracted portion of the original source code according to the request.

Another example can include any of the above and/or below examples where the instructions, when executed by the processor, cause the system to input the extracted portion of the original source code to a generative machine learning model with a prompt requesting modification of the extracted portion, receive modified source code from the generative machine learning model, and replace the extracted portion of the original source code with the modified source code.

### CONCLUSION

The disclosed techniques can generate a mapping data structure that maps positions in virtual preprocessed source code to corresponding positions in original source code, or, in some cases, a scratch memory region. The mapping data structure can be employed to extract portions of the original source code that satisfy certain conditions, such as having control flow statements, calling functions, or accessing specific data structures. **In** some cases, the extracted portions of the original source code can be modified using a generative language model.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims and other features and acts that would be recognized by one skilled in the art are intended to be within the scope of the claims.

## Claims

1. A computer-implemented method (600) comprising:
obtaining (602) original source code from a code base, the original source code having one or more preprocessor statements;
extracting (604) the one or more preprocessor statements from the original source code;
analyzing (606) the one or more preprocessor statements to determine positions in virtual preprocessed source code that correspond to positions in the original source code;
generating (608) a mapping data structure that maps the positions in the virtual preprocessed source code to the positions in the original source code; and
storing (610) the mapping data structure, the mapping data structure providing a basis for subsequent generation of the virtual preprocessed source code.

2. The computer-implemented method of claim 1, wherein the one or more preprocessor statements comprise an include statement in a particular source code file, the include statement including contents of another file into the particular source code file.

3. The computer-implemented method of claim 1 or claim 2, wherein the one or more preprocessor statements comprise a conditional compilation statement in a particular source code file.

4. The computer-implemented method of any of claims 1 to 3, wherein the one or more preprocessor statements comprise a code rewriting statement.

5. The computer-implemented method of any of claims 1 to 4, wherein the mapping data structure maps character positions of the virtual preprocessed source code to corresponding character positions in the original source code.

6. The computer-implemented method of any of claims 1 to 5, the mapping data structure having an operation type field indicating operations to be performed when generating the virtual preprocessed source code.

7. A computer-implemented method (650) comprising:
receiving (652) a request to modify original source code from a code base that satisfies one or more conditions;
accessing (654) a mapping data structure that maps positions in virtual preprocessed source code to positions in the original source code from the code base;
generating (656) the virtual preprocessed source code by retrieving characters from the positions in the original source code;
based at least on the virtual preprocessed source code, extracting (658) a portion of the original source code from the code base that satisfies the one or more conditions; and
modifying (660) the extracted portion of the original source code according to the request.

8. The computer-implemented method of claim 7, wherein the modifying comprises:
inputting the extracted portion of the original source code to a generative machine learning model with a prompt requesting modification of the extracted portion; and
receiving modified source code from the generative machine learning model.

9. The computer-implemented method of claim 7 or claim 8, wherein the one or more conditions specify that the extracted portion of the original source code includes control flow statements.

10. The computer-implemented method of any of claims 7 to 9, wherein the one or more conditions specify that the extracted portion of the original source code includes function call statements.

11. The computer-implemented method of any of claims 7 to 10, wherein the one or more conditions specify that the extracted portion of the original source code includes variable-accessing statements.

12. The computer-implemented method of any of claims 7 to **11,** wherein the one or more conditions specify that the extracted portion of the original source code includes statements that access a specific data structure.

13. The computer-implemented method of any of claims 7 to 12, wherein the prompt requests optimizing the extracted portion of the original source code or adding comments to the extracted portion of the original source code.

14. The computer-implemented method of any of claims 7 to 13, wherein the prompt requests translating the extracted portion of the original source code into a different programming language.

15. A system (700, 730) comprising:
a processor (701); and
a storage medium (702) storing instructions which, when executed by the processor, cause the system to perform the computer-implemented method of any of claims 1 to 14.
